# EUROPÄISCHE PATENTANMELDUNG

(11) **EP 3 881 992 A1**
(43) Veröffentlichungstag der Anmeldung: **22.09.2021**
(21) Anmeldenummer: 20164414.3
(22) Anmeldetag: 20.03.2020
(51) Int. Cl.: B27B 17/08, B25F 5/00

(54) **HANDGETRAGENES GARTEN-, FORST- UND/ODER BAUBEARBEITUNGSGERÄT UND VERFAHREN ZUM BETREIBEN EINES HANDGETRAGENEN GARTEN- FORST- UND/ODER BAUBEARBEITUNGSGERÄTS**

(71) Anmelder: Andreas Stihl AG & Co. KG, 71336 Waiblingen (DE)
(72) Erfinder: Heinzelmann, Georg, 71364 Winnenden (DE); Sontheim, Pirmin, 73663 Berglen-Rettersburg (DE); Haas, Alexander, 73565 Spraitbach (DE); Seibold, Peter, 70734 Fellbach (DE)
(74) Vertreter: Patentanwälte Ruff, Wilhelm, Beier, Dauster & Partner mbB

(57) **Zusammenfassung**

Die Erfindung bezieht sich auf ein handgetragenes Garten-, Forst- und/oder Baubearbeitungsgerät (1), wobei das Garten-, Forst- und/oder Baubearbeitungsgerät (1) aufweist:
- ein Schneidwerkzeug (2), wobei das Schneidwerkzeug (2) zum Durchtrennen eines Bearbeitungsstücks ausgebildet ist,
- einen elektrischen Antriebsmotor (3), wobei der Antriebsmotor (3) zum Antrieb des Schneidwerkzeugs (2) ausgebildet ist,
- ein Motorbedienelement (4), wobei das Motorbedienelement (4) über einen Stellbereich (SB) von einer Minimal-Stellung (minST) bis zu einer Maximal-Stellung (maxST) benutzerstellbar ist, und
- eine Steuereinrichtung (5), wobei die Steuereinrichtung (5) zum Steuern einer Soll-Drehzahl (nsoll) des Antriebsmotors (3) in Abhängigkeit einer Stellung (ST) des Motorbedienelements (4) in mindestens einem ersten Betriebsmodus (BM1) und einem zweiten Betriebsmodus (BM2) ausgebildet ist,
- wobei in dem ersten Betriebsmodus (BM1) die Soll-Drehzahl (nsoll) über mindestens einem Abschnitt (AS, AS') von minimal 0,5-mal des Stellbereichs (SB) mit zunehmender Stellung (ST) zunimmt, wobei die Zunahme (ZU1, ZU1') sich über den Abschnitt (AS, AS') maximal um 60 % ändert, und
. wobei in dem zweiten Betriebsmodus (BM2) die Soll-Drehzahl (nsoll) ab maximal 50 % des Stellbereichs (SB) mit zunehmender Stellung (ST) minimal 0,9-mal einer Maximal-Soll-Drehzahl (maxnsoll2) des zweiten Betriebsmodus (BM2) ist.

## Beschreibung

### ANWENDUNGSGEBIET UND STAND DER TECHNIK

Die Erfindung bezieht sich auf ein handgetragenes Garten-, Forst- und/oder Baubearbeitungsgerät und ein Verfahren zum Betreiben eines solchen handgetragenen Garten-Forst- und/oder Baubearbeitungsgeräts.

### AUFGABE UND LÖSUNG

Der Erfindung liegt als Aufgabe die Bereitstellung eines handgetragenen Garten-, Forst- und/oder Baubearbeitungsgeräts und/oder eines Verfahrens zum Betreiben eines solchen handgetragenen Garten-, Forst- und/oder Baubearbeitungsgeräts zugrunde, das, insbesondere jeweils, verbesserte Eigenschaften aufweist, insbesondere benutzerfreundlich ist.

Die Erfindung löst diese Aufgabe durch die Bereitstellung eines handgetragenen Garten-, Forst- und/oder Baubearbeitungsgeräts mit den Merkmalen des Anspruchs 1 und/oder eines Verfahrens mit den Merkmalen des Anspruchs 15. Vorteilhafte Weiterbildungen der Erfindung sind in den abhängigen Ansprüchen beschrieben.

Das erfindungsgemäße handgetragene (Englisch: hand-portable) Garten-, Forst- und/oder Baubearbeitungsgerät umfasst bzw. weist ein, insbesondere bewegliches, insbesondere rotationbewegliches, Schneidwerkzeug, einen elektrischen Antriebsmotor, ein Motorbedienelement und eine, insbesondere elektrische, Steuereinrichtung, insbesondere Reglereinrichtung, auf. Das Schneidwerkzeug ist zum Durchtrennen eines, insbesondere zu schneidenden, Bearbeitungsstücks ausgebildet bzw. konfiguriert. Der Antriebsmotor ist zum, insbesondere unmittelbaren oder mittelbaren, Antrieb bzw. zur, insbesondere unmittelbaren bzw. mittelbaren, Bewegung des Schneidwerkzeugs ausgebildet bzw. konfiguriert. Das Motorbedienelement ist über einen Stellbereich, insbesondere einen Stellweg, von einer Minimal-Stellung bis zu einer, insbesondere von der Minimal-Stellung verschiedenen, Maximal-Stellung benutzerstellbar, insbesondere benutzerbeweglich, insbesondere ausgebildet bzw. konfiguriert. Die Steuereinrichtung ist zum, insbesondere automatischen, Steuern, insbesondere Regeln, einer Soll-Drehzahl, insbesondere eines Werts der Soll-Drehzahl, des Antriebsmotors in Abhängigkeit einer Stellung, insbesondere eines Werts der Stellung, des Motorbedienelements in bzw. gemäß mindestens einem ersten Betriebsmodus und einem, insbesondere von dem ersten Betriebsmodus verschiedenen, zweiten Betriebsmodus ausgebildet bzw. konfiguriert. In dem ersten Betriebsmodus nimmt die Soll-Drehzahl, insbesondere der Wert der Soll-Drehzahl, über mindestens einem Abschnitt von minimal 0,5-mal, insbesondere minimal 0,6-mal, insbesondere minimal 0,7-mal, insbesondere minimal 0,8-mal, insbesondere 0,9-mal, des Stellbereichs mit zunehmender Stellung, insbesondere zunehmendem Wert der Stellung, zu. Die Zunahme, insbesondere ein Wert der Zunahme, ändert sich über den Abschnitt maximal um 60 Prozent (%), insbesondere maximal um 50 %, insbesondere maximal um 40 %, insbesondere maximal um 30 %, insbesondere maximal um 20%, insbesondere maximal um 10 %, insbesondere nicht. In dem zweiten Betriebsmodus ist die Soll-Drehzahl, insbesondere der Wert der Soll-Drehzahl, ab maximal 50 % bzw. einer Hälfte, insbesondere maximal 40 %, insbesondere maximal 30 %, des Stellbereichs, insbesondere des Abschnitts, insbesondere bis zu einem Ende des Stellbereichs, mit zunehmender Stellung, insbesondere mit zunehmendem Wert der Stellung, minimal 0,9-mal einer Maximal-Soll-Drehzahl, insbesondere einem Wert der Maximal-Soll-Drehzahl, des zweiten Betriebsmodus.

Dies, insbesondere der erste Betriebsmodus, ermöglicht ein gefühlvolles bzw. sensibles Dosieren der Soll-Drehzahl, insbesondere mittels Stellen, insbesondere Verstellen, des Motorbedienelements, insbesondere durch einen Benutzer des Garten-, Forst- und/oder Baubearbeitungsgeräts. Dies ermöglicht ein gefühlvolles bzw. sensibles Bearbeiten eines Bearbeitungsstücks mittels des Garten-, Forst- und/oder Baubearbeitungsgeräts, insbesondere des Schneidwerkzeugs. Zusätzlich ermöglicht dies, insbesondere der zweite Betriebsmodus, ein schnelles Erreichen der hohen Soll-Drehzahl ohne dass das Motorbedienelement weit, insbesondere in seine Maximal-Stellung, gestellt werden bzw. sein braucht. Dies ermöglicht ein schnelles Durchtrennen eines Bearbeitungsstücks. Somit ermöglicht dies, insbesondere ermöglichen der erste Betriebsmodus und der zweite Betriebsmodus, eine Multifunktion des Garten-, Forst- und/oder Baubearbeitungsgeräts. Somit ist das Garten-, Forst- und/oder Baubearbeitungsgerät benutzerfreundlich.

Insbesondere kann handgetragenes, Garten-, Forst- und/oder Baubearbeitungsgerät bedeuten, dass das Garten-, Forst- und/oder Baubearbeitungsgerät eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann.

Das Bearbeitungsstück kann Holz, Gras, Stein oder Metall sein.

Der Antriebsmotor, insbesondere ein Rotor des Antriebsmotors, und das Schneidwerkzeug können kupplungsfrei, insbesondere drehfest, miteinander gekoppelt sein. Zusätzlich oder alternativ braucht oder kann das Garten-, Forst- und/oder Baubearbeitungsgerät nicht ein, insbesondere umschaltbares, Getriebe, insbesondere funktional zwischen dem Antriebsmotor und dem Schneidwerkzeug, aufweisen.

Das Motorbedienelement kann, insbesondere als, ein Druck-Bedienelement, insbesondere eine Druck-Taste, insbesondere ausgebildet, sein. Zusätzlich oder alternativ kann das Motorbedienelement mindestens drei, insbesondere mindestens fünf, verschiedene Stellungen aufweisen. Insbesondere kann das Motorbedienelement stufenlos benutzerstellbar sein.

Der Abschnitt kann ab einer, insbesondere von der Minimal-Stellung verschiedenen, Start-Stellung des Motorbedienelements anfangen und/oder mit der Maximal-Stellung enden. Zusätzlich oder alternativ kann die Zunahme mit null oder einer, insbesondere von null verschiedenen, Minimal-Soll-Drehzahl, insbesondere des ersten Betriebsmodus, anfangen und/oder mit einer Maximal-Soll-Drehzahl des ersten Betriebsmodus enden. Insbesondere kann die Maximal-Soll-Drehzahl minimal 2-mal der Minimal-Soll-Drehzahl sein. Weiter zusätzlich oder alternativ kann die Zunahme sich von einem Anfang des Abschnitts gegenüber einem Ende des Abschnitts maximal um 60 % ändern. Beispielsweise: Anfang des Abschnitts 100 in willkürlichen Einheiten (Englisch: arbitrary units; Abkürzung: a.u.) und Ende des Abschnitts 40 a.u. oder 160 a.u., oder Ende des Abschnitts 100 a.u. und Anfang des Abschnitts 40 a.u. oder 160 a.u.

In dem ersten Betriebsmodus kann die Soll-Drehzahl über mindestens dem Abschnitt mit abnehmender Stellung abnehmen. Die Abnahme kann sich über den Abschnitt maximal um 60 %, insbesondere maximal um 50 %, insbesondere maximal um 40 %, insbesondere maximal um 30 %, insbesondere maximal um 20 %, insbesondere maximal um 10 %, insbesondere nicht, ändern.

In dem zweiten Betriebsmodus kann die Soll-Drehzahl bis zu maximal 50 %, insbesondere maximal 40 %, insbesondere maximal 30 %, des Stellbereichs, insbesondere von einem Ende des Stellbereichs, mit abnehmender Stellung minimal 0,9-mal der Maximal-Soll-Drehzahl des zweiten Betriebsmodus sein.

In anderen Worten: In dem ersten Betriebsmodus und/oder in dem zweiten Betriebsmodus kann die Soll-Drehzahl mit abnehmender Stellung wie mit zunehmender Stellung der Stellung, insbesondere zugeordnet, sein. Lediglich die Abnahme kann mit einer, insbesondere von der Start-Stellung verschiedenen und/oder der Minimal-Stellung gleichen, Stopp- bzw. Aus-Stellung des Motorbedienelements enden und/oder die Abnahme kann mit einer niedrigeren Minimal-Soll-Drehzahl, insbesondere null, enden.

Der erste Betriebsmodus, insbesondere eine Zuordnung der Soll-Drehzahl zu der Stellung in dem ersten Betriebsmodus, und/oder der zweite Betriebsmodus, insbesondere eine Zuordnung der Soll-Drehzahl zu der Stellung in dem zweiten Betriebsmodus, können/kann, insbesondere jeweils, insbesondere bis auf eine Umschaltung in einen anderen Betriebsmodus, insbesondere zeitlich, konstant sein. Zusätzlich oder alternativ können/kann mindestens der erste Betriebsmodus und der zweite Betriebsmodus werksseitig fest eingestellt bzw. vorgegeben bzw. nicht durch den Benutzer vorgebbar sein.

Die Soll-Drehzahl kann in einem lastfreien Zustand des Garten-, Forst- und/oder Baubearbeitungsgeräts, insbesondere des Antriebsmotors, erreicht werden.

Die Steuereinrichtung kann zum Steuern eines Drehmoments erzeugt von dem Antriebsmotor zum Erreichen der Soll-Drehzahl ausgebildet sein. Zusätzlich oder alternativ kann die Steuereinrichtung zum Steuern der Soll-Drehzahl zu einem Zeitpunkt entweder in dem ersten Betriebsmodus oder dem zweiten Betriebsmodus ausgebildet sein. Weiter zusätzlich oder alternativ kann die Steuereinrichtung zum Steuern der Soll-Drehzahl in dem ersten und dem zweiten Betriebsmodus und mindestens einem dritten Betriebsmodus ausgebildet sein. Weiter zusätzlich oder alternativ kann die Steuereinrichtung zum Umschalten zwischen mindestens dem ersten Betriebsmodus und dem zweiten Betriebsmodus ausgebildet sein. Weiter zusätzlich oder alternativ kann die Steuereinrichtung einen Mikrocontroller aufweisen.

In einer Weiterbildung der Erfindung ist das Garten-, Forst- und/oder Baubearbeitungsgerät eine Säge, insbesondere eine Kettensäge, ein Freischneider oder ein Trennschleifer. Zusätzlich oder alternativ ist das Schneidwerkzeug ein Sägewerkzeug, insbesondere eine Sägekette oder ein Sägeblatt, oder ein Schneidblatt. Insbesondere im Fall der Säge, insbesondere der Kettensäge, und/oder des Freischneiders und/oder des Sägewerkzeugs, insbesondere der Sägekette oder des Sägeblatts, ermöglicht dies, insbesondere der erste Betriebsmodus, ein einfaches Fällen und/oder ein einfaches Ablängen eines Baumstamms. Zusätzlich ermöglicht dies, insbesondere der zweite Betriebsmodus, ein einfaches Entfernen von Ästen bzw. Entasten und/oder eine einfache Jungbestandspflege. Weiter zusätzlich oder alternativ ermöglicht im Fall des Trennschleifers dies, insbesondere der zweite Betriebsmodus, einen Anschnitt des Bearbeitungsstücks. Zusätzlich ermöglicht dies, insbesondere der erste Betriebsmodus, zeitlich nach dem Anschnitt ein Durchtrennen des Bearbeitungsstücks.

In einer Weiterbildung der Erfindung nimmt in dem ersten Betriebsmodus die Soll-Drehzahl, insbesondere der Wert der Soll-Drehzahl, über mindestens dem Abschnitt mit zunehmender Stellung, insbesondere zunehmendem Wert der Stellung, linear zu. Alternativ erniedrigt bzw. verringert in dem ersten Betriebsmodus die Zunahme sich über den Abschnitt mit zunehmender Stellung, insbesondere zunehmendem Wert der Stellung. Dies ermöglicht ein besonders gefühlvolles bzw. sensibles Dosieren der Soll-Drehzahl.

In einer Weiterbildung der Erfindung nimmt in dem zweiten Betriebsmodus die Soll-Drehzahl, insbesondere der Wert der Soll-Drehzahl, insbesondere von einer, insbesondere von der Minimal-Stellung und/oder der Maximal-Stellung verschiedenen, Start-Stellung des Motorbedienelements, bis zu maximal 50 %, insbesondere maximal 40 %, insbesondere maximal 30 %, des Stellbereichs mit zunehmender Stellung, insbesondere zunehmendem Wert der Stellung, insbesondere von einer, insbesondere von null verschiedenen, Minimal-Soll-Drehzahl, insbesondere einem Wert der Minimal-Soll-Drehzahl, insbesondere des zweiten Betriebsmodus, bis zu minimal 0,9-mal der Maximal-Soll-Drehzahl, insbesondere dem Wert der Maximal-Soll-Drehzahl, des zweiten Betriebsmodus zu, insbesondere linear. Insbesondere die Zunahme, insbesondere ein Wert der Zunahme, ändert sich, insbesondere von der Start-Stellung, bis zu maximal 50 %, insbesondere maximal 40 %, insbesondere maximal 30 %, des Stellbereichs maximal um 60 %, insbesondere maximal um 50 %, insbesondere maximal um 40 %, insbesondere maximal um 30 %, insbesondere maximal um 20 %, insbesondere maximal um 10 %, insbesondere nicht, und/oder erniedrigt bzw. verringert sich, insbesondere von der Start-Stellung, bis zu maximal 50 %, insbesondere maximal 40 %, insbesondere maximal 30 %, des Stellbereichs mit zunehmender Stellung, insbesondere zunehmendem Wert der Stellung. Dies ermöglicht einen sanften Start und/oder ein etwas gefühlvolles bzw. sensibles Dosieren der Soll-Drehzahl in dem zweiten Betriebsmodus, insbesondere ohne in den ersten Betriebsmodus umschalten zu brauchen.

In einer Weiterbildung der Erfindung ist in dem zweiten Betriebsmodus die Soll-Drehzahl, insbesondere der Wert der Soll-Drehzahl, ab maximal 50 %, insbesondere maximal 40 %, insbesondere maximal 30 %, des Stellbereichs, insbesondere bis zu dem Ende des Stellbereichs, mit zunehmender Stellung, insbesondere zunehmendem Wert der Stellung, die Maximal-Soll-Drehzahl, insbesondere der Wert der Maximal-Soll-Drehzahl, des zweiten Betriebsmodus.

Zusätzlich oder alternativ kann die Maximal-Soll-Drehzahl des zweiten Betriebsmodus die Maximal-Soll-Drehzahl aller Betriebsmodi sein.

In einer Weiterbildung der Erfindung ist die Maximal-Soll-Drehzahl, insbesondere der Wert der Maximal-Soll-Drehzahl, des zweiten Betriebsmodus höher als eine Maximal-Soll-Drehzahl, insbesondere ein Wert der Maximal-Soll-Drehzahl, des ersten Betriebsmodus. Dies ermöglicht ein besonders schnelles Durchtrennen eines Bearbeitungsstücks, insbesondere ein besonders einfaches Entasten und/oder eine besonders einfache Jungbestandspflege. Insbesondere kann die Maximal-Soll-Drehzahl des zweiten Betriebsmodus minimal 1,1-mal und/oder maximal 5-mal, insbesondere maximal 4-mal, insbesondere maximal 3-mal, insbesondere maximal 2-mal, höher als die Maximal-Soll-Drehzahl des ersten Betriebsmodus sein.

In einer Weiterbildung der Erfindung ist die Steuereinrichtung zum Steuern der Soll-Drehzahl, insbesondere des Werts der Soll-Drehzahl, mindestens gleich, insbesondere minimal 0,9-mal, insbesondere minimal 0,8-mal, insbesondere minimal 0,7-mal, der Maximal-Soll-Drehzahl, insbesondere des Werts der Maximal-Soll-Drehzahl, des zweiten Betriebsmodus mittels Feldschwächung in dem Antriebsmotor ausgebildet bzw. konfiguriert. Dies ermöglicht, dass die Maximal-Soll-Drehzahl des zweiten Betriebsmodus hoch sein kann. Zusätzlich oder alternativ ermöglicht dies eine wirkungsgradoptimierte Auslegung des Antriebsmotors. Insbesondere kann die hohe Soll-Drehzahl und somit eine hohe kinetische Energie des Schneidwerkzeugs in manchem Fall, insbesondere wie dem Entasten und/oder der Jungbestandspflege, wichtiger bzw. relevanter als ein hohes Drehmoment sein. Im Gegensatz dazu kann bei einer niedrigeren Soll-Drehzahl in manchem Fall, insbesondere wie dem Fällen und/oder Ablängen, ein hohes Drehmoment wichtig bzw. relevant sein, insbesondere zum Losreißen des Schneidwerkzeugs. Insbesondere kann die Steuereinrichtung zum Steuern der Soll-Drehzahl in mindestens dem zweiten Betriebsmodus mittels Feldschwächung in dem Antriebsmotor ausgebildet sein. Zusätzlich oder alternativ kann die Steuereinrichtung zum Steuern einer niedrigeren Soll-Drehzahl in mindestens dem ersten Betriebsmodus und/oder zweiten Betriebsmodus mittels MMPA ausgebildet sein.

Alternativ kann die Steuereinrichtung zum Steuern der Soll-Drehzahl in mindestens dem ersten Betriebsmodus und/oder dem zweiten Betriebsmodus mittels Blockkommutierung ausgebildet sein.

In einer Weiterbildung der Erfindung ist die Steuereinrichtung zum Steuern bis zu minimal 0,9-mal, insbesondere zu, der Maximal-Soll-Drehzahl, insbesondere dem Wert der Maximal-Soll-Drehzahl, des zweiten Betriebsmodus mit minimal 0,8-mal, insbesondere und/oder maximal, einer Maximal-Abgabeleistung, insbesondere eines Werts der Maximal-Abgabeleistung, des Antriebsmotors ausgebildet bzw. konfiguriert. Dies ermöglicht, insbesondere trotz Feldschwächung, soweit vorhanden, einen guten Wirkungsgrad des Antriebsmotors.

In einer Weiterbildung der Erfindung ist der Antriebsmotor ein bürstenloser Gleichstrommotor oder ein Permanentmagnet-Synchronmotor oder ein Asynchronmotor. Zusätzlich oder alternativ ist die Steuereinrichtung zum FOC-Steuern (FOC: Field-Oriented Control) oder DTC-Steuern (DTC: Direct Torque Control) ausgebildet bzw. konfiguriert. Dies ermöglicht das Steuern der Soll-Drehzahl in mindestens dem zweiten Betriebsmodus mittels Feldschwächung.

In einer Weiterbildung der Erfindung umfasst bzw. weist das Garten- Forst- und/oder Baubearbeitungsgerät eine elektrische Stelleinrichtung auf. Das Motorbedienelement ist zur Stellung einer elektrischen Größe, insbesondere eines Werts der Größe, der Stelleinrichtung ausgebildet bzw. konfiguriert. Die Steuereinrichtung ist zum Steuern der Soll-Drehzahl, insbesondere des Werts der Soll-Drehzahl, in Abhängigkeit der Größe, insbesondere des Werts der Größe, ausgebildet bzw. konfiguriert. Dies ermöglicht das Steuern der Soll-Drehzahl in Abhängigkeit der Stellung. Insbesondere kann die Stelleinrichtung ein Potentiometer oder einen Hall-Sensor aufweisen und/oder die Größe kann ein elektrischer Widerstand oder eine Hall-Spannung sein.

In einer Weiterbildung der Erfindung nimmt in dem ersten Betriebsmodus die Soll-Drehzahl, insbesondere der Wert der Soll-Drehzahl, bei einer bzw. ausgelöst durch eine Rückstellung des Motorbedienelements in seine Minimal-Stellung über einem Auslauf- bzw. Brems-Zeitbereich des ersten Betriebsmodus von der zeitlich vor der Rückstellung zuletzt gesteuerten Soll-Drehzahl, insbesondere der Maximal-Soll-Drehzahl, auf null ab, insbesondere linear. Die Abnahme, insbesondere ein Wert der Abnahme, ändert sich über minimal 0,9-mal des Auslauf-Zeitbereichs, insbesondere den Auslauf-Zeitbereich, maximal um 60 %, insbesondere maximal um 50 %, insbesondere maximal um 40 %, insbesondere maximal um 30 %, insbesondere maximal um 20 %, insbesondere maximal um 10 %, insbesondere nicht.

Dies ermöglicht ein besonders gefühlvolles bzw. sensibles Dosieren der Soll-Drehzahl.

Zusätzlich oder alternativ nimmt in dem zweiten Betriebsmodus die Soll-Drehzahl, insbesondere der Wert der Soll-Drehzahl, bei einer bzw. ausgelöst durch eine Rückstellung des Motorbedienelements in seine Minimal-Stellung über einem Auslauf- bzw. Brems-Zeitbereich des zweiten Betriebsmodus von der zeitlich vor der Rückstellung zuletzt gesteuerten Soll-Drehzahl, insbesondere der Maximal-Soll-Drehzahl, auf null in seiner frühen Hälfte, insbesondere des Auslauf-Zeitbereichs, maximal 0,5-mal, insbesondere maximal 0,25-mal, so viel ab wie in seiner späten Hälfte, insbesondere des Auslauf-Zeitbereichs, insbesondere nicht ab.

Dies ermöglicht, dass die Soll-Drehzahl relativ lange im Bereich der zeitlich vor der Rückstellung zuletzt gesteuerten Soll-Drehzahl bleiben kann. Somit ermöglicht dies bei einer erneuten Stellung der Motorbedienelements ein besonders schnelles Erreichen der, insbesondere hohen, Soll-Drehzahl, insbesondere der Maximal-Soll-Drehzahl.

Insbesondere kann der Auslauf-Zeitbereich des ersten Betriebsmodus zeitlich gleich lang wie der Auslauf-Zeitbereich des zweiten Betriebsmodus sein. Zusätzlich oder alternativ können/kann der Auslauf-Zeitbereich des ersten Betriebsmodus und/oder der Auslauf-Zeitbereich des zweiten Betriebsmodus, insbesondere jeweils, maximal 5 Sekunden (s), insbesondere maximal 2 s, und/oder minimal 0,1 s, insbesondere minimal 0,2 s, insbesondere minimal 0,5 s, lang sein. Weiter zusätzlich oder alternativ kann die Abnahme sich von einem Anfang des Auslauf-Zeitbereichs des ersten Betriebsmodus gegenüber einem Ende des Auslauf-Zeitbereichs des ersten Betriebsmodus maximal um 60 % ändern. Beispielsweise: Anfang des Auslauf-Zeitbereichs 100 a.u. und Ende des Auslauf-Zeitbereichs 40 a.u. oder 160 a.u., oder Ende des Auslauf-Zeitbereichs 100 a.u. und Anfang des Auslauf-Zeitbereichs 40 a.u. oder 160 a.u. Weiter zusätzlich oder alternativ kann in dem ersten Betriebsmodus und/oder dem zweiten Betriebsmodus die Abnahme durch Trudeln, insbesondere ohne aktives Bremsen, Rekuperieren bzw. rekuperierendes Bremsen, insbesondere zeitlich nach dem Trudeln, und Kurzschlussbremsen, insbesondere zeitlich nach dem Rekuperieren, erfolgen, insbesondere mittels der Steuereinrichtung. Insbesondere können diese drei Schritte in dem ersten Betriebsmodus und in dem zweiten Betriebsmodus zeitlich verschieden lang bzw. mit verschiedener Gewichtung erfolgen bzw. ausgeführt werden.

In einer Weiterbildung der Erfindung umfasst bzw. weist das Garten-, Forst- und/oder Baubearbeitungsgerät ein Motorbedienelement-Rückstellelement auf. Das Motorbedienelement-Rückstellelement ist zur Kraftbeaufschlagung des Motorbedienelements zur Rückstellung in seine Minimal-Stellung ausgebildet bzw. konfiguriert. Dies ermöglicht, dass die Soll-Drehzahl bei einem Nachlassen, insbesondere einem Loslassen, des gestellten Motorbedienelements, insbesondere automatisch, abnehmen kann. Insbesondere kann das Motorbedienelement-Rückstellelement eine Feder aufweisen, insbesondere sein. Zusätzlich oder alternativ kann das Potentiometer, soweit vorhanden, selbstrückstellend, insbesondere ausgebildet, sein.

In einer Weiterbildung der Erfindung umfasst bzw. weist das Garten- Forst- und/oder Baubearbeitungsgerät ein benutzerbetätigbares, insbesondere benutzerbewegliches, Umschaltbedienelement auf. Die Steuereinrichtung ist zum Umschalten zwischen mindestens dem ersten Betriebsmodus und dem zweiten Betriebsmodus ausgelöst durch eine Betätigung des Umschaltbedienelements ausgebildet bzw. konfiguriert. Dies ermöglicht eine einfache Einstellung des Garten- Forst- und/oder Baubearbeitungsgeräts für die jeweilige Bearbeitungsaufgabe, insbesondere durch den Benutzer. Insbesondere kann das Umschaltbedienelement von dem Motorbedienelement verschieden sein. Zusätzlich oder alternativ kann das Umschaltbedienelement, insbesondere als, ein Druck-Bedienelement, insbesondere eine Druck-Taste, insbesondere ausgebildet, sein. Weiter zusätzlich oder alternativ kann das Umschaltbedienelement selbstrückstellend, insbesondere ausgebildet, sein.

In einer Weiterbildung der Erfindung umfasst bzw. weist das Garten- Forst- und/oder Baubearbeitungsgerät eine, insbesondere elektrische, Ausgabeeinrichtung, insbesondere Anzeige, auf. Die Ausgabeeinrichtung ist zum, insbesondere automatischen, Ausgeben, insbesondere Anzeigen, einer benutzerwahrnehmbaren Information über ein Steuern in bzw. gemäß mindestens dem ersten Betriebsmodus oder dem zweiten Betriebsmodus ausgebildet bzw. konfiguriert. Dies ermöglicht für den Benutzer ein Feedback. Insbesondere kann die Anzeige mindestens eine LED aufweisen, insbesondere sein.

Das erfindungsgemäße Verfahren ist zum, insbesondere automatischen, Betreiben eines, insbesondere des, handgetragenen Garten- Forst- und/oder Baubearbeitungsgeräts wie zuvor beschrieben ausgebildet bzw. konfiguriert. Das Verfahren umfasst bzw. weist den Schritt auf: Steuern, insbesondere automatisches Steuern, der Soll-Drehzahl des Antriebsmotors in Abhängigkeit der Stellung des Motorbedienelements in mindestens, insbesondere entweder, dem ersten Betriebsmodus oder dem zweiten Betriebsmodus mittels der Steuereinrichtung.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: schematisch ein erfindungsgemäßes handgetragenes Garten-, Forst- und/oder Baubearbeitungsgerät und ein erfindungsgemäßes Verfahren zum Betreiben des Garten-, Forst- und/oder Baubearbeitungsgeräts,
- Fig. 2: einen Graphen einer Soll-Drehzahl eines Antriebsmotors über einer Stellung eines Motorbedienelements des Garten-, Forst- und/oder Baubearbeitungsgeräts der Fig. 1 in einem ersten Betriebsmodus und einen Graphen der Soll-Drehzahl über der Stellung in einem zweiten Betriebsmodus,
- Fig. 3: einen Graphen eines Drehmoments des Antriebsmotors über der Soll-Drehzahl,
- Fig. 4: einen Graphen einer Maximal-Abgabeleistung des Antriebsmotors über der Soll-Drehzahl, und
- Fig. 5: einen Graphen der Soll-Drehzahl über einer Zeit in dem ersten Betriebsmodus und einen Graphen der Soll-Drehzahl über der Zeit in dem zweiten Betriebsmodus.

### DETAILLIERTE BESCHREIBUNG DER AUSFÜHRUNGSBEISPIELE

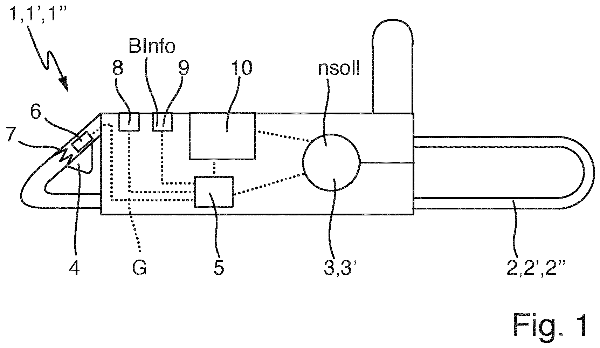

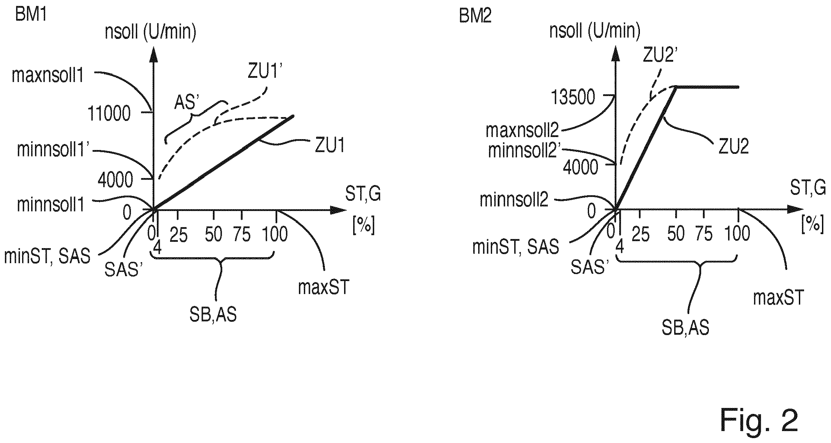

Fig. 1 zeigt ein erfindungsgemäßes handgetragenes Garten-, Forst- und/oder Baubearbeitungsgerät 1 und erfindungsgemäßes Verfahren zum Betreiben des handgetragenen Garten- Forst- und/oder Baubearbeitungsgeräts 1. Das Garten-, Forst- und/oder Baubearbeitungsgerät 1 weist ein Schneidwerkzeug 2, einen elektrischen Antriebsmotor 3, ein Motorbedienelement 4 und eine Steuereinrichtung 5 auf. Das Schneidwerkzeug 2 ist zum Durchtrennen eines Bearbeitungsstücks ausgebildet, insbesondere durchtrennt. Der Antriebsmotor 3 ist zum Antrieb des Schneidwerkzeugs 2 ausgebildet, insbesondere treibt an. Das Motorbedienelement 4 ist über einen Stellbereich SB von einer Minimal-Stellung minST bis zu einer Maximal-Stellung maxST benutzerstellbar, insbesondere gestellt, wie in Fig. 2 gezeigt. Die Steuereinrichtung 5 ist zum Steuern einer Soll-Drehzahl nsoll des Antriebsmotors 3 in Abhängigkeit einer Stellung ST des Motorbedienelements 4 in mindestens einem ersten Betriebsmodus BM1, wie in Fig. 2 links gezeigt, und einem zweiten Betriebsmodus BM2, wie in Fig. 2 rechts gezeigt, ausgebildet, insbesondere steuert. In dem ersten Betriebsmodus BM1 nimmt die Soll-Drehzahl nsoll über mindestens einem Abschnitt AS, AS' von minimal 0,5-mal, in dem in Fig. 2 links durch eine durchgezogene Linie gezeigten Ausführungsbeispiel gleich, des Stellbereichs SB mit zunehmender Stellung ST zu. Die Zunahme ZU1, ZU1' ändert sich über den Abschnitt AS, AS' maximal um 60 %. In dem zweiten Betriebsmodus BM2 ist die Soll-Drehzahl nsoll ab maximal 50 % des Stellbereichs SB, insbesondere des Abschnitts AS, AS', mit zunehmender Stellung ST minimal 0,9-mal einer Maximal-Soll-Drehzahl maxnsoll2 des zweiten Betriebsmodus BM2.

Das Verfahren weist den Schritt auf: Steuern der Soll-Drehzahl nsoll des Antriebsmotors 3 in Abhängigkeit der Stellung ST des Motorbedienelements 4 in mindestens dem ersten Betriebsmodus BM1 oder dem zweiten Betriebsmodus BM2 mittels der Steuereinrichtung 5.

In dem in Fig. 2 links durch eine durchgezogene Linie gezeigten Ausführungsbeispiel fängt der Abschnitt AS ab der Minimal-Stellung minST an und endet mit der Maximal-Stellung maxST. In alternativen Ausführungsbeispielen kann der Abschnitt ab einer von der Minimal-Stellung verschiedenen Start-Stellung des Motorbedienelements anfangen. In dem in Fig. 2 links durch eine gestrichelte Linie gezeigten Ausführungsbeispiel fängt die Zunahme ZU1' ab einer Start-Stellung SAS' 4 % an und endet mit einer Stellung 75 %.

Insbesondere ist die Minimal-Stellung minST 0 %. Zusätzlich ist die Maximal-Stellung maxST 100 %.

Zusätzlich fängt in dem in Fig. 2 links durch eine durchgezogene Linie gezeigten Ausführungsbeispiel die Zunahme ZU1 mit einer Minimal-Soll-Drehzahl minnsoll1 gleich null an und endet mit einer Maximal-Soll-Drehzahl maxnsoll1 des ersten Betriebsmodus BM1. In alternativen Ausführungsbeispielen kann die Zunahme mit einer von null verschiedenen Minimal-Soll-Drehzahl anfangen. Insbesondere fängt in dem in Fig. 2 links durch eine gestrichelte Linie gezeigten Ausführungsbeispiel die Zunahme ZU1' mit einer Minimal-Soll-Drehzahl minnsoll1' 4000 Umdrehungen pro Minute (U/min) an.

Weiter zusätzlich ist in dem gezeigten Ausführungsbeispiel das Garten-, Forst- und/oder Baubearbeitungsgerät 1 eine Säge 1', insbesondere eine Kettensäge 1". In alternativen Ausführungsbeispielen kann das Garten-, Forst- und/oder Baubearbeitungsgerät in Freischneider oder ein Trennschleifer sein.

Zusätzlich ist in dem gezeigten Ausführungsbeispiel das Schneidwerkzeug 2 ein Sägewerkzeug 2', insbesondere eine Sägekette 2". In alternativen Ausführungsbeispielen kann das Schneidwerkzeug ein Sägeblatt oder ein Schneidblatt sein.

Im Detail nimmt in dem in Fig. 2 links durch eine durchgezogene Linie gezeigten Ausführungsbeispiel in dem ersten Betriebsmodus BM1 die Soll-Drehzahl nsoll über mindestens dem Abschnitt AS mit zunehmender Stellung ST linear zu.

Alternativ erniedrigt in dem in Fig. 2 links durch eine gestrichelte Linie gezeigten Ausführungsbeispiel in dem ersten Betriebsmodus BM1 die Zunahme ZU1' sich über den Abschnitt AS' mit zunehmender Stellung ST.

Des Weiteren nimmt in dem zweiten Betriebsmodus BM2 die Soll-Drehzahl nsoll, insbesondere von einer, in dem in Fig. 2 rechts durch eine durchgezogene Linie gezeigten Ausführungsbeispiel der Minimal-Stellung minST gleichen, Start-Stellung SAS, SAS' des Motorbedienelements 4, bis zu maximal 50 % des Stellbereichs BS mit zunehmender Stellung ST, insbesondere von einer Minimal-Soll-Drehzahl minnsoll2, minnsoll2', in dem in Fig. 2 rechts durch eine durchgezogene Linie gezeigten Ausführungsbeispiel gleich null, bis zu minimal 0,9-mal der Maximal-Soll-Drehzahl maxnsoll2 des zweiten Betriebsmodus BM2 zu, in dem in Fig. 2 rechts durch eine durchgezogene Linie gezeigten Ausführungsbeispiel linear. Insbesondere die Zunahme ZU2, ZU2' ändert sich, insbesondere von der Start-Stellung SAS, SAS', bis zu maximal 50 % des Stellbereichs SB maximal um 60 %, in dem in Fig. 2 rechts durch eine durchgezogene Linie gezeigten Ausführungsbeispiel nicht, und/oder erniedrigt sich, insbesondere von der Start-Stellung SAS', bis zu maximal 50 % des Stellbereichs SB mit zunehmender Stellung ST, insbesondere in dem in Fig. 2 rechts durch eine gestrichelte Linie gezeigten Ausführungsbeispiel. In alternativen Ausführungsbeispielen kann die Zunahme mit einer von null verschiedenen Minimal-Soll-Drehzahl anfangen. Insbesondere fängt in dem in Fig. 2 rechts durch eine gestrichelte Linie gezeigten Ausführungsbeispiel die Zunahme ZU2' mit einer Minimal-Soll-Drehzahl minnsoll2' 4000 U/min an. Zusätzlich oder alternativ nimmt in dem in Fig. 2 rechts durch eine gestrichelte Linie gezeigten Ausführungsbeispiel in dem zweiten Betriebsmodus BM2 die Soll-Drehzahl nsoll von einer Start-Stellung SAS' 4 % zu.

Außerdem ist in dem zweiten Betriebsmodus BM2 die Soll-Drehzahl nsoll ab maximal 50 % des Stellbereichs SB mit zunehmender Stellung ST die Maximal-Soll-Drehzahl maxnsoll2 des zweiten Betriebsmodus BM2.

Weiter ist die Maximal-Soll-Drehzahl maxnsoll2 des zweiten Betriebsmodus BM2 höher als die Maximal-Soll-Drehzahl maxnsoll1 des ersten Betriebsmodus BM1.

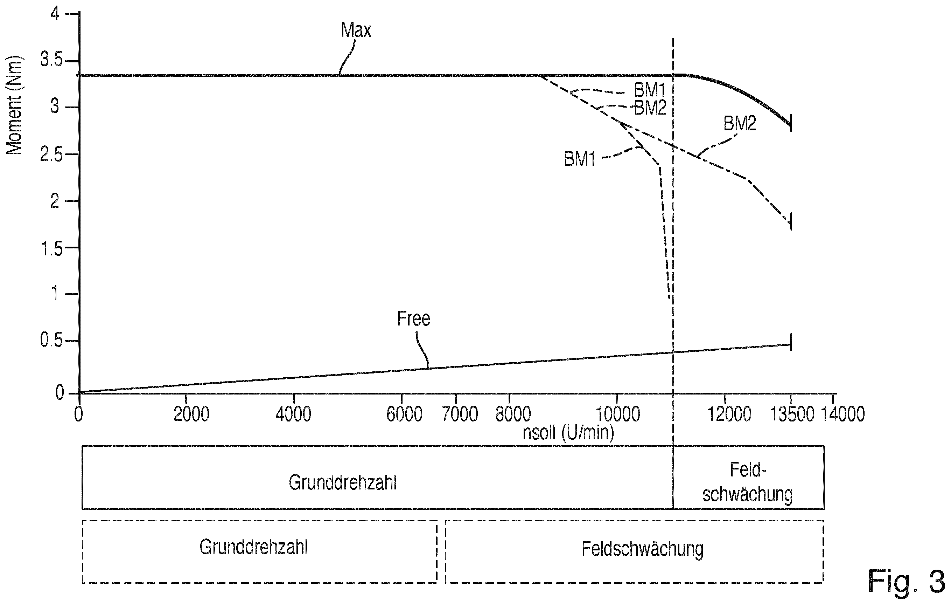

Zudem ist die Steuereinrichtung 5 zum Steuern der Soll-Drehzahl nsoll mindestens gleich, insbesondere minimal 0,9-mal, der Maximal-Soll-Drehzahl maxnsoll2 des zweiten Betriebsmodus BM2 mittels Feldschwächung in dem Antriebsmotor 3 ausgebildet, insbesondere steuert, wie in Fig. 3 gezeigt.

In dem gezeigten Ausführungsbeispiel ist die Steuereinrichtung 5 zum Steuern der Soll-Drehzahl nsoll in dem zweiten Betriebsmodus BM2 nicht mittels Feldschwächung in dem Antriebsmotor 3 ausgebildet. In alternativen Ausführungsbeispielen kann die Steuereinrichtung zum Steuern der Soll-Drehzahl in mindestens dem zweiten Betriebsmodus mittels Feldschwächung in dem Antriebsmotor ausgebildet sein. Insbesondere wie in Fig. 3 durch gestrichelte Linien gezeigt.

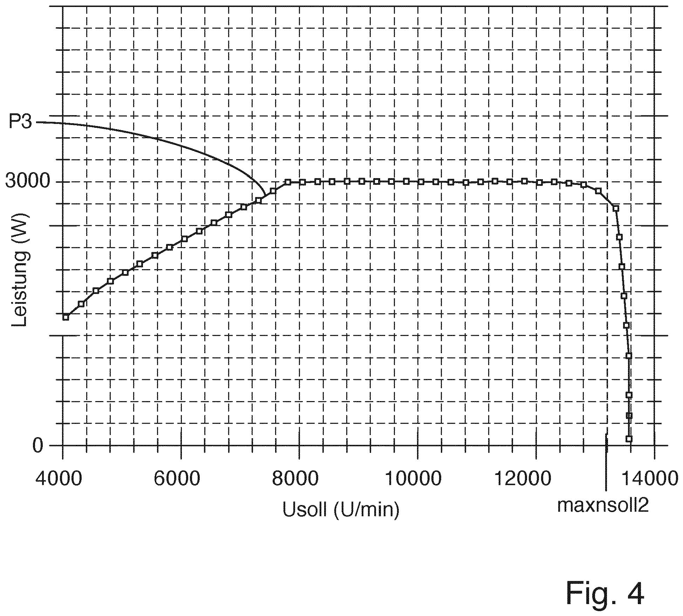

Des Weiteren ist die Steuereinrichtung 5 zum Steuern bis zu minimal 0,9-mal der Maximal-Soll-Drehzahl maxnsoll2 des zweiten Betriebsmodus BM2 mit minimal 0,8-mal einer Maximal-Abgabeleistung P3 des Antriebsmotors 3 ausgebildet, insbesondere steuert, wie in Fig. 4 gezeigt.

Außerdem ist in dem gezeigten Ausführungsbeispiel der Antriebsmotor 3 ein bürstenloser Gleichstrommotor 3', wie in Fig. 1 gezeigt. In alternativen Ausführungsbeispielen kann der Antriebsmotor ein Permanentmagnet-Synchronmotor oder ein Asynchronmotor sein.

Zusätzlich ist die Steuereinrichtung 5 zum FOC-Steuern oder DTC-Steuern ausgebildet, insbesondere steuert.

Weiter weist das Garten- Forst- und/oder Baubearbeitungsgerät 1 eine elektrische Stelleinrichtung 6 auf. Das Motorbedienelement 4 ist zur Stellung einer elektrischen Größe G der Stelleinrichtung 6 ausgebildet, insbesondere stellt. Die Steuereinrichtung 5 ist zum Steuern der Soll-Drehzahl nsoll in Abhängigkeit der Größe G ausgebildet, insbesondere steuert, wie in Fig. 2 gezeigt.

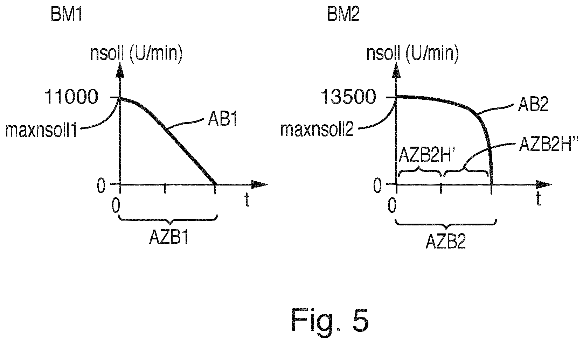

Zudem nimmt in dem ersten Betriebsmodus BM1 die Soll-Drehzahl nsoll bei einer Rückstellung des Motorbedienelements 4 in seine Minimal-Stellung minST über einem Auslauf-Zeitbereich AZB1 des ersten Betriebsmodus BM1 von der zeitlich vor der Rückstellung zuletzt gesteuerten Soll-Drehzahl, insbesondere der Maximal-Soll-Drehzahl maxnsoll1, auf null ab, wie in Fig. 5 links gezeigt. Die Abnahme AB1 ändert sich über minimal 0,9-mal des Auslauf-Zeitbereichs AZB1 maximal um 60 %.

Zusätzlich nimmt in dem zweiten Betriebsmodus BM2 die Soll-Drehzahl nsoll bei einer Rückstellung des Motorbedienelements 4 in seine Minimal-Stellung minST über einem Auslauf-Zeitbereich AZB2 des zweiten Betriebsmodus BM2 von der zeitlich vor der Rückstellung zuletzt gesteuerten Soll-Drehzahl, insbesondere der Maximal-Soll-Drehzahl maxnsoll2, auf null in seiner frühen Hälfte AZB2H' maximal 0,5-mal so viel ab wie in seiner späten Hälfte AZB2H", wie in Fig. 5 rechts gezeigt.

Des Weiteren weist das Garten-, Forst- und/oder Baubearbeitungsgerät 1 ein Motorbedienelement-Rückstellelement 7 auf, wie in Fig. 1 gezeigt. Das Motorbedienelement-Rückstellelement 7 ist zur Kraftbeaufschlagung des Motorbedienelements 4 zur Rückstellung in seine Minimal-Stellung minST ausgebildet, insbesondere beaufschlagt mit Kraft.

Außerdem weist das Garten- Forst- und/oder Baubearbeitungsgerät 1 ein benutzerbetätigbares Umschaltbedienelement 8 auf. Die Steuereinrichtung 5 ist zum Umschalten zwischen mindestens dem ersten Betriebsmodus BM1 und dem zweiten Betriebsmodus BM2 ausgelöst durch eine Betätigung des Umschaltbedienelements 8 ausgebildet, insbesondere schaltet um.

Weiter weist das Garten- Forst- und/oder Baubearbeitungsgerät 1 eine Ausgabeeinrichtung 9 auf. Die Ausgabeeinrichtung 9 ist zum Ausgeben einer benutzerwahrnehmbaren Information Blnfo über ein Steuern in mindestens dem ersten Betriebsmodus BM1 oder dem zweiten Betriebsmodus BM2 ausgebildet, insbesondere gibt aus.

In dem gezeigten Ausführungsbeispiel ist die Maximal-Soll-Drehzahl maxnsoll1 des ersten Betriebsmodus BM1 11000 U/min. Zusätzlich oder alternativ ist die Maximal-Soll-Drehzahl maxnsoll2 des zweiten Betriebsmodus BM2 13500 U/min. In alternativen Ausführungsbeispielen kann die Maximal-Soll-Drehzahl des zweiten Betriebsmodus bis zu 35000 U/min sein. Weiter zusätzlich oder alternativ ist in dem ersten Betriebsmodus BM1 und/oder in dem zweiten Betriebsmodus BM2, insbesondere jeweils, die, insbesondere verfügbare, Maximal-Abgabeleistung P3 des Antriebsmotors 3 3000 Watt (W). Weiter zusätzlich oder alternativ ist in dem ersten Betriebsmodus BM1 und/oder in dem zweiten Betriebsmodus BM2, insbesondere jeweils, eine Freifahrfunktion, insbesondere für das Schneidwerkzeug 2, eingeschaltet bzw. aktiviert.

Zudem ist in dem gezeigten Ausführungsbeispiel die Steuereinrichtung 5 zum Steuern der Soll-Drehzahl nsoll in dem ersten Betriebsmodus BM1 und dem zweiten Betriebsmodus BM2 ausgebildet, insbesondere steuert. In alternativen Ausführungsbeispielen kann die Steuereinrichtung zum Steuern der Soll-Drehzahl in dem ersten und dem zweiten Betriebsmodus und mindestens einem dritten Betriebsmodus ausgebildet sein, insbesondere steuern. Insbesondere kann der dritte Betriebsmodus wie der erste Betriebsmodus mit folgendem/n Unterschied/en sein. Die Maximal-Soll-Drehzahl des dritten Betriebsmodus kann niedriger als die Maximal-Soll-Drehzahl des ersten Betriebsmodus sein, insbesondere 9.000 U/min. Zusätzlich oder alternativ kann in dem dritten Betriebsmodus die, insbesondere freigegebene, Maximal-Abgabeleistung des Antriebsmotors, insbesondere und somit ein von dem Antriebsmotor erzeugtes Maximal-Drehmoment, niedriger als in dem ersten Betriebsmodus sein, insbesondere zwischen 2100 W und 2300 W. Weiter zusätzlich oder alternativ kann in dem dritten Betriebsmodus die Freifahrfunktion ausgeschaltet bzw. deaktiviert sein. Weiter zusätzlich oder alternativ kann der erste Betriebsmodus BM1 als Allround- bzw. Normal-Modus bezeichnet werden. Weiter zusätzlich oder alternativ kann der zweite Betriebsmodus BM2 als Speed-Modus bezeichnet werden. Weiter zusätzlich oder alternativ kann der dritte Betriebsmodus als Eco-Modus bezeichnet werden.

Des Weiteren ist in dem gezeigten Ausführungsbeispiel das Garten-, Forst- und/oder Baubearbeitungsgerät 1, insbesondere sind/ist der Antriebsmotor 3 und/oder die Steuereinrichtung 5, zum elektrischen Verbinden mit einem Akkumulator 10 ausgebildet, insbesondere elektrisch verbunden. In alternativen Ausführungsbeispielen kann das Garten-, Forst- und/oder Baubearbeitungsgerät zusätzlich oder alternativ zum elektrischen Verbinden mit einem Kabel ausgebildet sein.

Außerdem sind in dem gezeigten Ausführungsbeispiel das Schneidwerkzeug 2 und der Antriebsmotor 3, insbesondere mechanisch, gekoppelt, wie in Fig. 1 durch eine durchgezogene Linie gezeigt. Weiter sind der Antriebsmotor 3 und die Steuereinrichtung 5, insbesondere elektrisch, gekoppelt, wie in Fig. 1 durch eine gepunktete Linie gezeigt. Zudem sind die Steuereinrichtung 5 und das Potentiometer 6, insbesondere elektrisch, gekoppelt. Des Weiteren sind das Potentiometer 6 und das Motorbedienelement 4, insbesondere mechanisch, gekoppelt. Außerdem sind das Motorbedienelement 4 und das Motorbedienelement-Rückstellelement 7, insbesondere mechanisch, gekoppelt. Weiter sind die Steuereinrichtung 5 und das Umschaltbedienelement 8, insbesondere elektrisch, gekoppelt. Zudem sind die Steuereinrichtung 5 und die Ausgabeeinrichtung 9, insbesondere elektrisch, gekoppelt.

Wie die gezeigten und oben erläuterten Ausführungsbeispiele deutlich machen, stellt die Erfindung ein vorteilhaftes handgetragenes Garten-, Forst- und/oder Baubearbeitungsgerät und/oder ein vorteilhaftes Verfahren zum Betreiben eines solchen handgetragenen Garten-, Forst- und/oder Baubearbeitungsgeräts bereit, das, insbesondere jeweils, verbesserte Eigenschaften aufweist, insbesondere benutzerfreundlich ist.

## Patentansprüche

1. Handgetragenes Garten-, Forst- und/oder Baubearbeitungsgerät (1), wobei das Garten-, Forst- und/oder Baubearbeitungsgerät (1) aufweist:
- ein Schneidwerkzeug (2), wobei das Schneidwerkzeug (2) zum Durchtrennen eines Bearbeitungsstücks ausgebildet ist,
- einen elektrischen Antriebsmotor (3), wobei der Antriebsmotor (3) zum Antrieb des Schneidwerkzeugs (2) ausgebildet ist,
- ein Motorbedienelement (4), wobei das Motorbedienelement (4) über einen Stellbereich (SB) von einer Minimal-Stellung (minST) bis zu einer Maximal-Stellung (maxST) benutzerstellbar ist, und
- eine Steuereinrichtung (5), wobei die Steuereinrichtung (5) zum Steuern einer Soll-Drehzahl (nsoll) des Antriebsmotors (3) in Abhängigkeit einer Stellung (ST) des Motorbedienelements (4) in mindestens einem ersten Betriebsmodus (BM1) und einem zweiten Betriebsmodus (BM2) ausgebildet ist,
- wobei in dem ersten Betriebsmodus (BM1) die Soll-Drehzahl (nsoll) über mindestens einem Abschnitt (AS, AS') von minimal 0,5-mal des Stellbereichs (SB) mit zunehmender Stellung (ST) zunimmt, wobei die Zunahme (ZU1, ZU1') sich über den Abschnitt (AS, AS') maximal um 60 % ändert, und
wobei in dem zweiten Betriebsmodus (BM2) die Soll-Drehzahl (nsoll) ab maximal 50 % des Stellbereichs (SB) mit zunehmender Stellung (ST) minimal 0,9-mal einer Maximal-Soll-Drehzahl (maxnsoll2) des zweiten Betriebsmodus (BM2) ist.

2. Handgetragenes Garten-, Forst- und/oder Baubearbeitungsgerät (1) nach Anspruch 1,
- wobei das Garten-, Forst- und/oder Baubearbeitungsgerät (1) eine Säge (1'), insbesondere eine Kettensäge (1"), ein Freischneider oder ein Trennschleifer ist, und/oder
- wobei das Schneidwerkzeug (2) ein Sägewerkzeug (2'), insbesondere eine Sägekette (2") oder ein Sägeblatt, oder ein Schneidblatt ist.

3. Handgetragenes Garten-, Forst- und/oder Baubearbeitungsgerät (1) nach einem der vorhergehenden Ansprüche,
- wobei in dem ersten Betriebsmodus (BM1) die Soll-Drehzahl (nsoll) über mindestens dem Abschnitt (AS) mit zunehmender Stellung (ST) linear zunimmt, oder
- wobei in dem ersten Betriebsmodus (BM1) die Zunahme (ZU1') sich über den Abschnitt (AS') mit zunehmender Stellung (ST) erniedrigt.

4. Handgetragenes Garten-, Forst- und/oder Baubearbeitungsgerät (1) nach einem der vorhergehenden Ansprüche,
- wobei in dem zweiten Betriebsmodus (BM2) die Soll-Drehzahl (nsoll), insbesondere von einer Start-Stellung (SAS, SAS') des Motorbedienelements (4), bis zu maximal 50 % des Stellbereichs (SB) mit zunehmender Stellung (ST), insbesondere von einer Minimal-Soll-Drehzahl (minnsoll2, minnsoll2'), bis zu minimal 0,9-mal der Maximal-Soll-Drehzahl (maxnsoll2) des zweiten Betriebsmodus (BM2) zunimmt, insbesondere wobei die Zunahme (ZU2, ZU2') sich, insbesondere von der Start-Stellung (SAS, SAS'), bis zu maximal 50 % des Stellbereichs (SB) maximal um 60 % ändert und/oder mit zunehmender Stellung (ST) erniedrigt.

5. Handgetragenes Garten-, Forst- und/oder Baubearbeitungsgerät (1) nach einem der vorhergehenden Ansprüche,
- wobei in dem zweiten Betriebsmodus (BM2) die Soll-Drehzahl (nsoll) ab maximal 50 % des Stellbereichs (SB) mit zunehmender Stellung (ST) die Maximal-Soll-Drehzahl (maxnsoll2) des zweiten Betriebsmodus (BM2) ist.

6. Handgetragenes Garten-, Forst- und/oder Baubearbeitungsgerät (1) nach einem der vorhergehenden Ansprüche,
- wobei die Maximal-Soll-Drehzahl (maxnsoll2) des zweiten Betriebsmodus (BM2) höher als eine Maximal-Soll-Drehzahl (maxnsoll1) des ersten Betriebsmodus (BM1) ist.

7. Handgetragenes Garten-, Forst- und/oder Baubearbeitungsgerät (1) nach einem der vorhergehenden Ansprüche,
- wobei die Steuereinrichtung (5) zum Steuern der Soll-Drehzahl (nsoll) mindestens gleich, insbesondere minimal 0,9-mal, der Maximal-Soll-Drehzahl (maxnsoll2) des zweiten Betriebsmodus (BM2) mittels Feldschwächung in dem Antriebsmotor (3) ausgebildet ist.

8. Handgetragenes Garten-, Forst- und/oder Baubearbeitungsgerät (1) nach einem der vorhergehenden Ansprüche,
- wobei die Steuereinrichtung (5) zum Steuern bis zu minimal 0,9-mal der Maximal-Soll-Drehzahl (maxnsoll2) des zweiten Betriebsmodus (BM2) mit minimal 0,8-mal einer Maximal-Abgabeleistung (P3) des Antriebsmotors (3) ausgebildet ist.

9. Handgetragenes Garten-, Forst- und/oder Baubearbeitungsgerät (1) nach einem der vorhergehenden Ansprüche,
- wobei der Antriebsmotor (3) ein bürstenloser Gleichstrommotor (3') oder ein Permanentmagnet-Synchronmotor oder ein Asynchronmotor ist, und/oder
- wobei die Steuereinrichtung (5) zum FOC-Steuern oder DTC-Steuern ausgebildet ist.

10. Handgetragenes Garten-, Forst- und/oder Baubearbeitungsgerät (1) nach einem der vorhergehenden Ansprüche,
- wobei das Garten- Forst- und/oder Baubearbeitungsgerät (1) eine elektrische Stelleinrichtung (6) aufweist,
- wobei das Motorbedienelement (4) zur Stellung einer elektrischen Größe (G) der Stelleinrichtung (6) ausgebildet ist, und
- wobei die Steuereinrichtung (5) zum Steuern der Soll-Drehzahl (nsoll) in Abhängigkeit der Größe (G) ausgebildet ist.

11. Handgetragenes Garten-, Forst- und/oder Baubearbeitungsgerät (1) nach einem der vorhergehenden Ansprüche,
- wobei in dem ersten Betriebsmodus (BM1) die Soll-Drehzahl (nsoll) bei einer Rückstellung des Motorbedienelements (4) in seine Minimal-Stellung (minST) über einem Auslauf-Zeitbereich (AZB1) des ersten Betriebsmodus (BM1) von der zeitlich vor der Rückstellung zuletzt gesteuerten Soll-Drehzahl, insbesondere einer Maximal-Soll-Drehzahl (maxnsoll1), auf null abnimmt, wobei die Abnahme (AB1) sich über minimal 0,9-mal des Auslauf-Zeitbereichs (AZB1) maximal um 60 % ändert, und/oder
- wobei in dem zweiten Betriebsmodus (BM2) die Soll-Drehzahl (nsoll) bei einer Rückstellung des Motorbedienelements (4) in seine Minimal-Stellung (minST) über einem Auslauf-Zeitbereich (AZB2) des zweiten Betriebsmodus (BM2) von der zeitlich vor der Rückstellung zuletzt gesteuerten Soll-Drehzahl, insbesondere der Maximal-Soll-Drehzahl (maxnsoll2), auf null in seiner frühen Hälfte (AZB2H') maximal 0,5-mal so viel abnimmt wie in seiner späten Hälfte (AZB2H").

12. Handgetragenes Garten-, Forst- und/oder Baubearbeitungsgerät (1) nach einem der vorhergehenden Ansprüche,
- wobei das Garten-, Forst- und/oder Baubearbeitungsgerät (1) ein Motorbedienelement-Rückstellelement (7) aufweist, wobei das Motorbedienelement-Rückstellelement (7) zur Kraftbeaufschlagung des Motorbedienelements (4) zur Rückstellung in seine Minimal-Stellung (minST) ausgebildet ist.

13. Handgetragenes Garten-, Forst- und/oder Baubearbeitungsgerät (1) nach einem der vorhergehenden Ansprüche,
- wobei das Garten- Forst- und/oder Baubearbeitungsgerät (1) ein benutzerbetätigbares Umschaltbedienelement (8) aufweist, und
- wobei die Steuereinrichtung (5) zum Umschalten zwischen mindestens dem ersten Betriebsmodus (BM1) und dem zweiten Betriebsmodus (BM2) ausgelöst durch eine Betätigung des Umschaltbedienelements (8) ausgebildet ist.

14. Handgetragenes Garten-, Forst- und/oder Baubearbeitungsgerät (1) nach einem der vorhergehenden Ansprüche,
- wobei das Garten- Forst- und/oder Baubearbeitungsgerät (1) eine Ausgabeeinrichtung (9) aufweist, wobei die Ausgabeeinrichtung (9) zum Ausgeben einer benutzerwahrnehmbaren Information (BInfo) über ein Steuern in mindestens dem ersten Betriebsmodus (BM1) oder dem zweiten Betriebsmodus (BM2) ausgebildet ist.

15. Verfahren zum Betreiben eines handgetragenen Garten- Forst- und/oder Baubearbeitungsgeräts (1) nach einem der vorhergehenden Ansprüche, wobei das Verfahren den Schritt aufweist:
- Steuern der Soll-Drehzahl (nsoll) des Antriebsmotors (3) in Abhängigkeit der Stellung (ST) des Motorbedienelements (4) in mindestens dem ersten Betriebsmodus (BM1) oder dem zweiten Betriebsmodus (BM2) mittels der Steuereinrichtung (5).
